(19) Europäisches Patentamt
European Patent Office
Office européen des brevets

(11) **EP 2 380 721 B1**

(12) **EUROPEAN PATENT SPECIFICATION**

(45) Date of publication and mention
of the grant of the patent:
**22.05.2013 Bulletin 2013/21**

(51) Int Cl.:
*B29C 33/38* *(2006.01)*    *B29C 41/36* *(2006.01)*
*B29C 35/08* *(2006.01)*    *B29C 43/02* *(2006.01)*
*B29C 59/02* *(2006.01)*    *B29C 71/04* *(2006.01)*
*B29D 11/00* *(2006.01)*    *G02B 3/00* *(2006.01)*
*B81C 99/00* *(2010.01)*

(21) Application number: **11158235.9**

(22) Date of filing: **15.03.2011**

(54) **Method for fabricating a master**

Verfahren zur Master-Herstellung

Procédé de fabrication d'un maître

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2010  JP 2010079912**

(43) Date of publication of application:
**26.10.2011  Bulletin 2011/43**

(73) Proprietor: **Fujifilm Corporation
Minato-ku
Tokyo (JP)**

(72) Inventor: **Fujiwara, Takayuki
Saitama (JP)**

(74) Representative: **HOFFMANN EITLE
Patent- und Rechtsanwälte
Arabellastrasse 4
81925 München (DE)**

(56) References cited:
**EP-A1- 0 786 326      EP-A1- 1 837 166
WO-A1-2009/116371   WO-A2-2004/002706
US-A1- 2008 079 182**

## Description

1. Technical Field

The present invention relates to a method for fabricating a master to be used in fabrication of a molding die.

2. Related Art

Recently, a portable terminal such as a cellular phone or a PDA (Personal Digital Assistant) includes a compact and thin imaging unit. Such an imaging unit generally includes a solid state imaging device such as a CCD (Charge Coupled Device) image sensor or a CMOS (Complementary Metal-Oxide Semiconductor) image sensor and a lens for forming an object image on the solid state imaging device.

In order that lenses packaged in such imaging units may be inexpensively mass-produced for reducing the cost of the imaging units, there is a demand for improvement of efficiency in the fabrication of lenses. As a method for fabricating lenses employed for this purpose, in known mass production of lenses to be packaged in the imaging units, a lens array including a plurality of lens parts formed in a substrate part is fabricated and the plural lens parts are separated from one another by cutting the substrate part.

As a method for fabricating the lens array, a fabrication method including the following procedures is known (see JP-B-4226067):

(1) A die having a lens forming face in a shape obtained by reversing a desired lens face shape is used for transferring the lens forming shape of the die onto a resin supplied to the front surface of a substrate, and the resin is cured.
(2) The procedure (1) is repeated, so as to arrange, on the surface of the substrate, resin molding parts molded into the lens face shape.
(3) In the same manner, the resin molding parts molded into the lens face shape are arranged also on the back surface of the substrate, so as to obtain a master.
(4) A metal such as Ni is deposited through electrocasting onto the both surfaces of the master, so as to obtain an upper die and a lower die.
(5) A photo-curing resin material or a thermosetting resin material is supplied between the upper die and the lower die.
(6) The resin material is sandwiched and pressed between the upper die and the lower die, so as to deform the resin material in accordance with the shapes of the dies.
(7) The resin material is irradiated with light or heated, so as to cure the resin material.

JP-B-4226067 describes a method for fabricating a master to be used for obtaining a molding die for use in molding of an optical device array in which a photo-curing resin is injected into a plurality of holes formed on a wafer, respective portions of the photo-curing resin thus injected into the plural holes are successively molded by using a transfer body, and the photo-curing resin is cured through irradiation with light while in contact with the transfer body.

WO 2004/002706 A2 discloses a process for making a mould piece having a main curved surface bearing a utility microstructure, in which a master article having a surface with a microstructure formed thereon is formed by coating a curable composition on the surface of the master article and pressing an elastomeric film, on which a microstructure is formed, against the curable composition on the master article to transfer the microstructure to the curable composition.

WO 2009/116371 A1 and US 2008/079182 A1 are also of use in understanding the background to the present invention.

According to the method described in JP-B-4226067, however, the operations of molding the resin, curing the resin with light and moving the master molding die are repeatedly performed through step-and-repeat processing in the fabrication of the master, and hence, the fabrication efficiency is poor.

SUMMARY OF THE INVENTION

Embodiments of present invention can provide a method for fabricating a master attaining improved fabrication efficiency.

According to an aspect of the present invention, there is provided a method for fabricating a master for use in fabrication of a molding die to be used in molding of a molded body having a plurality of molding parts arranged thereon as recited in Claim 1 below.

With the configuration of the aspect of the present invention, after a resin is supplied onto a master substrate, the resin is molded as a whole by curing it up to a quasi-cured state. The resin kept in the thus molded shape is completely cured through second curing processing, so as to obtain a master. In this manner, whole portions of the resin disposed in a plurality of positions on the master substrate may be cured through two-step curing processing, and hence, the fabrication efficiency may be improved as compared with the conventional step-and-repeat processing in which the molding and the curing are repeated on the respective portions of the resin supplied to prescribed positions on a master substrate.

The aspect of the present invention provides a method for fabricating a master in which the fabrication efficiency of the master to be used for fabricating a molding die for use in molding a molded body may be improved.

BRIEF DESCRIPTION OF THE DRAWINGS

To better understand the present invention, and to show how the same may be carried into effect, reference will now be made, by way of example only, to the accompanying Drawings, the content of which is briefly summarised below.

FIG. 1 is a cross-sectional view illustrating an exemplary imaging unit used for explaining an embodiment of the invention.

FIG. 2 is a plan view of an exemplary lens array used for explaining the embodiment of the invention.

FIG. 3 is a cross-sectional view of the lens array of FIG 2 taken on line III-III.

FIG. 4 is a plan view of an exemplary master model used for explaining the embodiment of the invention.

FIG. 5 is a cross-sectional view of the master model of FIG. 4 taken on line V-V.

FIGS. 6A through 6D are schematic diagrams successively illustrating fabrication procedures for the master model of FIG. 4.

FIG. 7 is a cross-sectional view of an exemplary molding die.

FIGS. 8A through 8C are schematic diagrams successively illustrating fabrication procedures for the lens array of FIG. 2.

FIGS. 9A through 9D are schematic diagrams illustrating a modification of the fabrication procedures for the master model of FIGS. 6A through 6D.

FIGS. 10A through 10D are schematic diagrams illustrating another modification of the fabrication procedures for the master model of FIGS. 6A through 6D.

FIGS. 11A through 11D are schematic diagrams illustrating another modification of the fabrication procedures for the master model of FIGS. 6A through 6D.

DETAILED DESCRIPTION

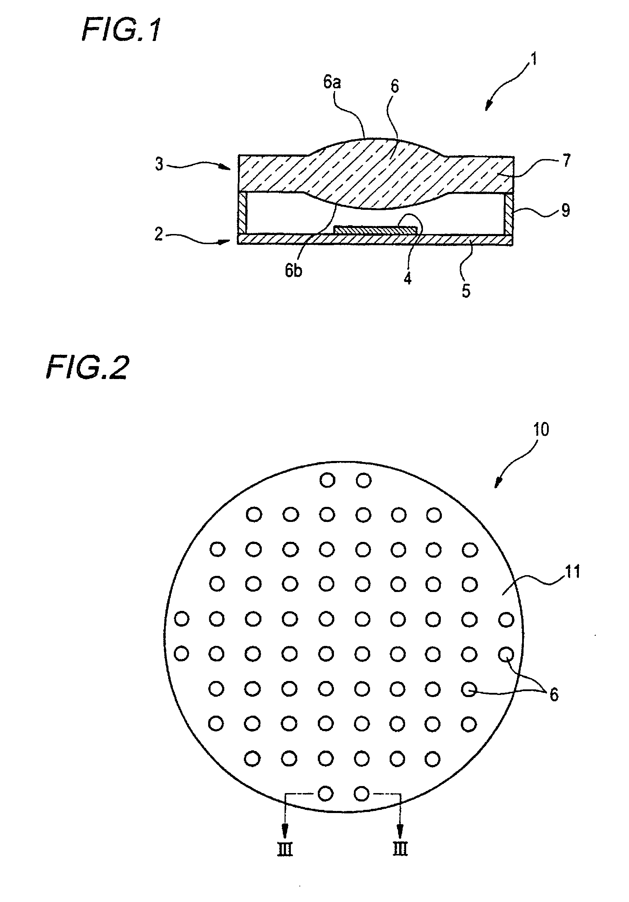

An imaging unit 1 of FIG. 1 includes a sensor module 2 and a lens module 3.

The sensor module 2 includes a solid state imaging device 4 and a substrate part 5. The substrate part 5 is made of a semiconductor material such as silicon. The solid state imaging device 4 is, for example, a CCD image sensor or a CMOS image sensor, and is obtained by forming a light receiving region, an insulating film, an electrode, a line and the like on the substrate part 5 by repeatedly subjecting the substrate part 5 to known filming processing, photolithography processing, etching processing, impurity doping processing and the like.

The lens module 3 includes a lens part 6 and a flange part 7. The lens part 6 has prescribed lens faces 6a and 6b on its both surfaces. Both the lens faces 6a and 6b are convex spherical faces in an example illustrated in FIG. 1, and any of various combinations of a convex spherical face, a concave spherical face, an aspherical face and a plane face may be employed in accordance with the application. The flange part 7 projects from the outer circumference of the lens part 6 in the shape of a flange so as to surround the outer circumference of the lens part 6. The lens part 6 and the flange part 7 are integrally formed from a translucent material.

The lens module 3 is stacked on and assembled to the sensor module 2 with a spacer 9 disposed between the flange part 7 and the substrate part 5. The spacer 9 has a thickness for providing a prescribed distance between the substrate part 5 of the sensor module 2 and the flange part 7 of the lens module 3 so that the lens part 6 of the lens module 3 may form an image on a light receiving face of the solid state imaging device 4 of the sensor module 2. The spacer 9 is adhered to the modules 2 and 3 with, for example, an adhesive.

The shape of the spacer 9 is not particularly specified as far as a prescribed distance may be provided between the substrate part of the sensor module 2 and the flange part 7 of the lens module 3, and the spacer 9 is preferably a frame-shaped member surrounding the solid state imaging device 4 for isolating a space formed between the modules 2 and 3 from the outside. In this manner, a foreign matter such as dust may be prevented from entering through a gap between the modules 2 and 3 and adhering to the light receiving face of the solid state imaging device 4. Furthermore, when the spacer 9 is made of a material with a light blocking property, unwanted light entering the solid state imaging device 4 through the gap between the modules 2 and 3 may be blocked.

Although merely one sensor module 3 is assembled onto the sensor module 2 in the example of FIG. 1, a plurality of lens modules 3 may be assembled. In such a case, a plurality of lens modules 3 are successively stacked with spacers similar to the spacer 9 sandwiched therebetween to be assembled onto the sensor module 2. Furthermore, the lens faces 6a and 6b of the lens parts 6 of these lens modules 3 may be different among the respective lens modules 3.

The imaging unit 1 having this structure is mounted through reflow on a circuit substrate of, for example, a portable terminal. A paste solder is precedently printed on the circuit substrate in a position for mounting the imaging unit 1, and the imaging unit 1 is placed thereon. Then, the circuit substrate including the imaging unit 1 is subjected to irradiation with infrared or annealing with hot air blow. Through this processing, the solder is molten, so as to mount the imaging unit 1 onto the circuit substrate.

The aforementioned lens module 3 is obtained by cutting a lens array, in which a plurality of lens parts 6 are one-dimensionally or two-dimensionally arranged, into pieces each including one lens part 6. Also, the sensor module 2 is similarly obtained by cutting a sensor array, in which a plurality of solid state imaging devices are one-dimensionally or two-dimensionally arranged, into pieces each including one solid state imaging device.

Now, the lens array used for obtaining the lens module 3 will be described.

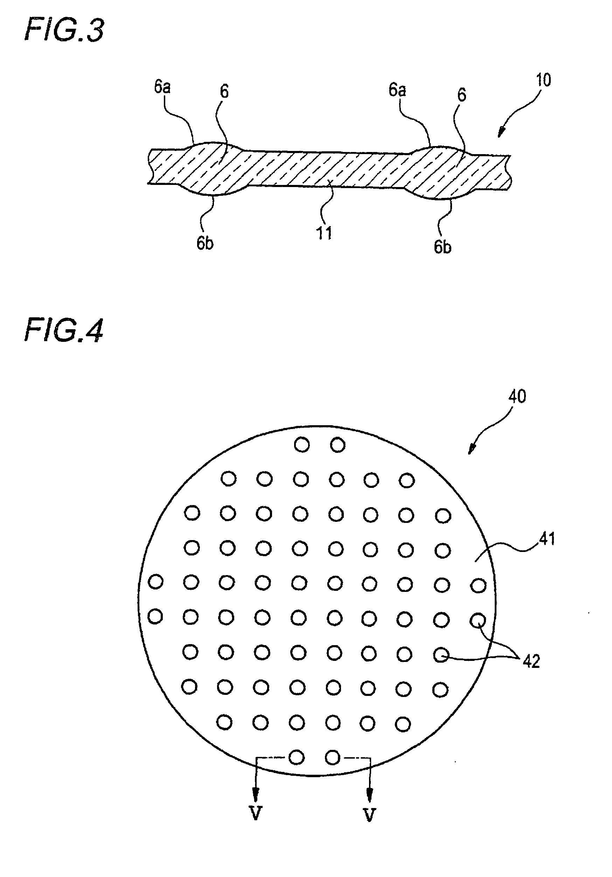

A lens array 10 illustrated in FIGS. 2 and 3 includes a plurality of lens parts 6 and a substrate part 11 connecting these lens parts 6 to one another. The lens array 10 is designated also as a wafer-level lens array in the shape of a wafer with a prescribed size as a whole and including a plurality of lens parts 6 arranged thereon, and in an example illustrated in these drawings, the plural lens parts 6 are two-dimensionally arranged. These lens parts 6 and the substrate part 11 are integrally formed from a translucent material.

The aforementioned lens module 3 (illustrated in FIG. 1) is obtained by cutting the substrate part 11 of the lens array 10 in portions disposed between adjacent lens parts 6. A portion of the substrate part 11 thus cut to remain on each lens part 6 corresponds to the flange part 7 of the lens module 3.

Next, an exemplary fabrication method for the lens array 10 will be described. In the following fabrication method for the lens array 10, a master model (hereinafter simply referred to as the master) of the lens array is first fabricated, and a molding die is obtained from this master. Thereafter, the lens array 10 is fabricated by using the molding die.

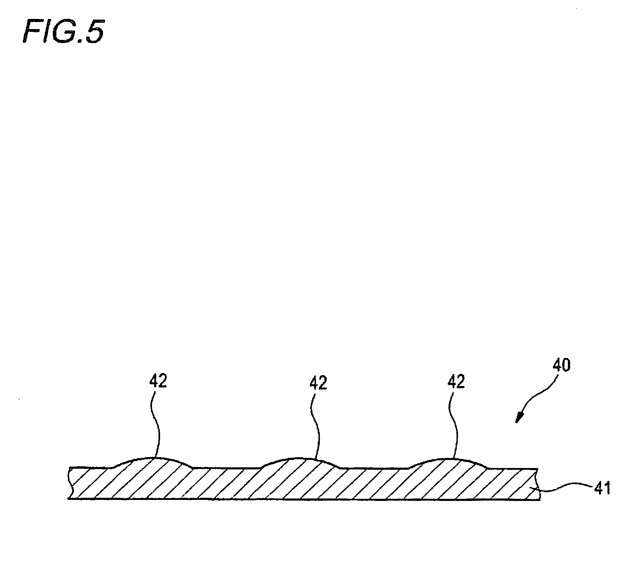

A master 40 illustrated in FIGS. 4 and 5 has a surface in the same shape as the surface of the lens array 10. The master 40 includes a substrate 41. The substrate 41 is made of a material having glass transition (with a glass transition point Tg1), such as glass or a resin, and is formed in the shape of a wafer with the same size as the lens array 10. On the surface of the substrate 41, lens shape faces 42 are two-dimensionally arranged in accordance with the arrangement of the lens parts 6 on the lens array 10. Each lens shape face 42 is in the same shape as each lens face 6a formed on the front surface of the lens part 6 of the lens array 10.

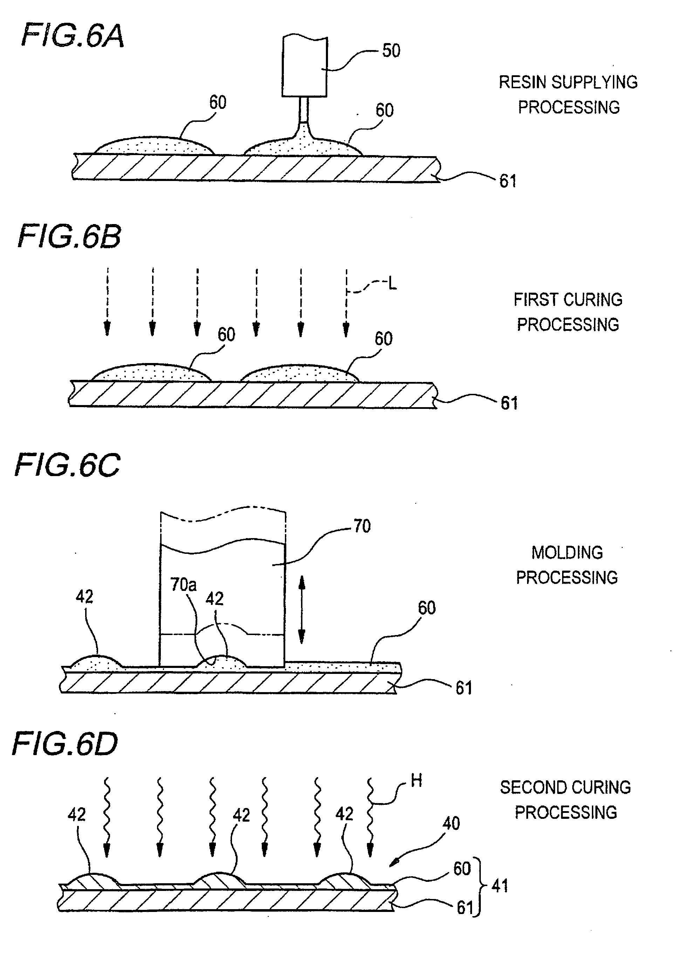

A method for fabricating the master 40 will now be described with reference to FIGS. 6A through 6D.

First, a resin 60 is supplied onto a master substrate 61 by using a dispenser 50 as illustrated in FIG. 6A. The resin 60 is supplied onto the master substrate 61 in a prescribed amount in each of a plurality of positions disposed at constant intervals.

In this exemplary case, the resin 60 is a resin with a UV curing property and a thermosetting property, and is cured to some extent through irradiation with UV and completely cured further by supplying heat.

After supplying the resin 60, all the portions of the resin supplied onto the master substrate 61 are irradiated with UV L as illustrated in FIG. 6B. Thus, the resin 60 is cured up to a quasi-cured state, that is, a cured state where the resin 60 may be deformed by applying a pressure in subsequent molding processing and the deformed shape of the resin 60 may be retained (first curing processing). At this point, all the portions of the resin 60 supplied to the plural positions on the master substrate 61 are simultaneously irradiated with the UV L and are cured as a whole. The resin 60 has viscosity of $10^2$ through $10^6$ Pa·s in the quasi-cured state.

After curing the resin 60 up to the quasi-cured state, the resin 60 is molded by using a master molding die 70 as illustrated in FIG. 6C. The master molding die has a lens molding face 70a for transferring a face in the same shape as the lens face 6a or 6b of the lens part 6 (illustrated in FIG. 1). When the master molding die 70 is pressed against the resin 60, the resin 60 is deformed in accordance with the shape of the lens molding face 70a. In this manner, a lens shape face 42 is formed on the master substrate 61. Such transfer using the master molding die 70 is repeated, and lens shape faces 42 in the same number as the lens parts 6 of the lens array 10 are formed on the surface of the master substrate 61.

After repeating the transfer using the master molding die 70 by a prescribed number of times, the lens shape faces 42 in the prescribed number formed on the master substrate 61 are heated as a whole, as illustrated in FIG. 6D, and thus, the resin 60 including the lens shape faces 42 and a flat portion disposed around the lens shape faces 42 is completely cured (second curing processing). In this manner, the master 40 is obtained.

As described above, after supplying the resin 60 onto the master substrate 41, the resin 60 is cured up to the quasi-cured state as a whole, and thereafter, the resin is molded by using the master molding die. Subsequently, the resin 60 retaining the molded shape is completely cured through the second curing processing, so as to give the master 40. Therefore, all the portions of the resin 60 disposed in a plurality of positions on the master substrate 41 may be cured through two-step curing processing, and hence, the fabrication efficiency may be improved as compared with the conventional step-and-repeat processing in which the molding and the curing are repeated on respective portions of a resin supplied in prescribed positions on the master substrate 41.

Next, a molding die for the lens array 10 will be described.

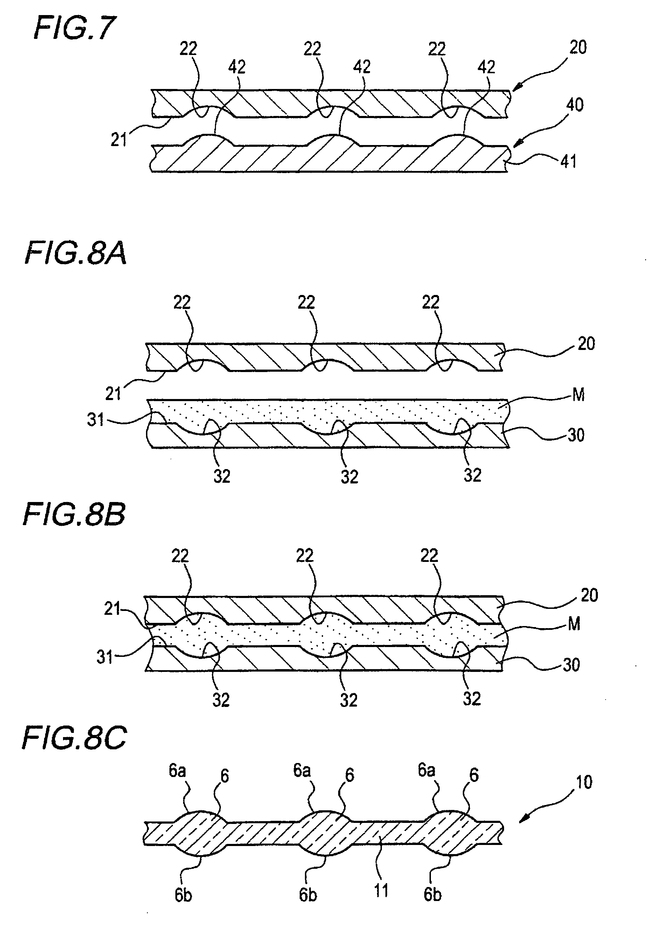

A molding die 20 illustrated in FIG. 7 is used for molding the shape of one surface of the lens array 10. The molding die 20 is fabricated by using the master 40.

A transfer face 21 of the molding die 20 is formed by transferring the shape of the master 40. In other words, the transfer face 21 of the molding die 20 is in a shape obtained by reversing the shape of the surface of the lens array 10. On the transfer face 21, lens forming faces 22 are two-dimensionally arranged in accordance with the arrangement of the lens parts 6 on the lens array 10. Each lens forming face 22 is molded into a concave spherical shape correspondingly to the convex spherical shape of each lens face 6a.

The molding die 20 is fabricated by, for example, the electrocasting. In the fabrication of the molding die by the electrocasting, a conducting film is first formed on the surface of the master 40. The master 40 thus having the conducting film thereon is immersed in a plating solution, and an electric field is formed in the solution with the conductive film used as an electrode. In this manner, nickel (Ni) is precipitated and deposited on the surface of the master 40. A surface of the nickel deposition disposed on the side of the master 40 corresponds to the transfer face 21. The nickel deposition thus obtained is used as the molding die 20.

When a molded body has lens parts on the both surfaces as the lens array 10 of FIG. 3, a molding die for molding the shape of the front surface and a molding die for molding the shape of the back surface are fabricated through the aforementioned procedures, and the pair of these molding dies are used for fabricating the lens array 10. Incidentally, when the arrangement and the shape of the lens parts are the same on the both surfaces of the lens array 10, a single master may be commonly used for obtaining two molding dies.

Next, a method for fabricating a lens array by using a molding die fabricated through the aforementioned processes will be described.

In an example described below, the molding die 20 fabricated through the aforementioned processes is used as an upper die, and a molding die 30 fabricated through similar processes is used as a lower die.

First, as illustrated in FIG. 8A, a molding material M is supplied onto a transfer face 31 of the lower die 30, so that the molding material M may spread over the transfer face 31. When the molding material M has comparatively low flowability, for example, the molding material M is preheated for increasing the flowability before supplying it onto the transfer face 31.

As the molding material M, a resin composition with an energy-curing property may be used. The resin composition with an energy-curing property may be a resin composition cured through heat or a resin composition cured through irradiation with activation energy beams (such as irradiation with UV or electron beams).

The resin composition preferably has appropriate flowability before the molding from the viewpoint of molding characteristics such as a characteristic to transfer the shape of a molding die. Specifically, a resin composition that is in the form of a liquid at room temperature and has viscosity of approximately 1000 through 50000 mPa·s is preferably used.

On the other hand, the resin composition preferably attains, when cured, heat resistance sufficient for avoiding heat distortion even through reflow processing. From this point of view, a cured substance of the resin composition has a glass transition temperature of preferably 200°C or more, more preferably 250°C or more and particularly preferably 300°C or more. In order to provide a resin composition with such high heat resistance, it is necessary to constrain mobility on the level of molecules, and examples of effective methods to be employed for this purpose are as follows: (1) A method in which the crosslink density per unit volume is increased; (2) a method in which a resin with a rigid ring system (i.e., a resin having an alicyclic system such as cyclohexane, norbomane or tetracyclododecane, an aromatic ring system such as benzene or naphthalene, a cardo system such as 9,9'-biphenylfluorene or a spiro system such as spirobiindane, and more specifically, a resin disclosed in, for example, JP-A-9-137043, JP-A-10-67970, JP-A-2003-55316, JP-A-2447-334018 or JP-A-2007-238883) is used; and (3) a method in which a substance with a high Tg such as inorganic particulates is homogeneously dispersed (as described in, for example, JP-A-5-209027 or JP-A-10-298265). A plurality of such methods may be employed in combination, and each method is preferably adjusted as far as other characteristics such as the flowability, a rate of shrinkage and a refractive index characteristic are not spoiled.

From the viewpoint of accuracy in transferring a shape, the resin composition preferably exhibits a small rate of volume shrinkage in the curing reaction. The rate of shrinkage of the resin composition caused in the curing is preferably 10% or less, more preferably 5% or less and particularly preferably 3% or less. Examples of the resin composition with a small rate of shrinkage caused in the curing are as follows: (1) A resin composition including a polymeric curing agent (such as a prepolymer) (specific examples of which are described in, for example, JP-A-2001-19740, JP-A-2004-302293 and JP-A-2007-211247; a number average molecular weight of the polymeric curing agent is preferably 200 through 100,000, more preferably 500 through 50,000 and particularly preferably 1,000 through 20,000, and a value calculated by dividing the number average molecular weight of the curing agent by the number of curing reactive groups thereof is preferably 50 through 10,000, more preferably 100 through 5,000 and particularly preferably 200 through 3,000); (2) a resin composition including a nonreactive substance (such as organic/inorganic particulates or a nonreactive resin) (specific examples of which are described in JP-A-6-298883, JP-A-2001-247793 and JP-A-2006-225434); (3) a resin composition including a low profile crosslinking reactive group (for example, a ring opening polymerizable group (such as an epoxy group (described in, for example, JP-A-2004-210932), an oxetanyl group (described in, for example, JP-A-8-134405), an episulfide group (described in, for example, JP-A-2002-105110) and a cyclic carbonate group (described in, for example, JP-A-7-62065)), a thiol/ene curing group (described in, for example, JP-A-2003-20334) or a hydrosilylation curing group (described in, for example, JP-A-2005-15666)); (4) a resin composition including a rigid skeleton resin (such as fluorene, adamantane or isophorone) (described in, for example, JP-A-9-137043); (5) a resin composition including two kinds of monomers having different polymerizable groups and forming an interpenetrating network structure (i.e., so-called IPN structure) (described in, for example, JP-A-2006-131868); and (6) a resin composition including an expansible substance (described in, for example, JP-A-2004-2719 and JP-A-2008-238417), and any of these resin compositions may be suitably used in the present invention. Furthermore, from the viewpoint of optimization of physical properties, some of the aforementioned compositions with a small rate of shrinkage caused in the curing are preferably combined for use (for example, a resin composition including the prepolymer having a ring opening polymerizable group and the particulates is used).

Furthermore, different resins respectively having at least two kinds of, namely, larger and smaller, Abbe numbers are preferably used. A resin having a larger Abbe number has an Abbe number (vd) of preferably 50 or more, more preferably 55 or more and particularly preferably 60 or more. The refractive index (nd) of such a resin is preferably 1.52 or more, more preferably 1.55 or more and particularly preferably 1.57 or more. As such a resin, an aliphatic resin is preferably used, and a resin of an alicyclic system (i.e., a resin having a ring system such as cyclohexane, norbornane, adamantane, tricyclodecane or tetracyclododecane, specific examples of which are described in, for example, JP-A-10-152551, JP-A-2002-212500, JP-A-2003-20334, JP-A-2004-210932, JP-A-2006-199790, JP-A-2007-2144, JP-A-2007-284650 and JP-A-2008-105999) is particularly preferred.

A resin having a smaller Abbe number has an Abbe number (vd) of preferably 30 or less, more preferably 25 or less and particularly preferably 20 or less. The refractive index (nd) of such a resin is preferably 1.60 or more, more preferably 1.63 or more and particularly preferably 1.65 or more. As such a resin, a resin of an aromatic system is preferably used, and for example, a resin having a system of 9,9'-diarylfluorene, naphthalene, benzothiazole, benzotriazole or the like (specific examples of which are described in, for example, JP-A-60-38411, JP-A-10-67977, JP-A-2002-47335, JP-A-2003-238884, JP-A-2004-83855, TP-A-2005-325331 and JP-A-2007-238883, WO-A-2006/095610 and JP-B-2537540) is preferably used.

For the purpose of increasing the refractive index or adjusting the Able number, the resin composition preferably includes inorganic particulates dispersed in a matrix. Examples of the inorganic particulates are oxide particulates, sulfide particulates, selenide particulates and telluride particulates. More specific examples are particulates of zirconium oxide, titanium oxide, zinc oxide, tin oxide, niobium oxide, cerium oxide, aluminum oxide, lanthanum oxide, yttrium oxide, zinc sulfide and the like. In particular, in the resin having a larger Abbe number, particulates of lanthanum oxide, aluminum oxide, zirconium oxide or the like are preferably dispersed, and in the resin having a lower Abbe number, particulates of titanium oxide, tin oxide, zirconium oxide or the like are preferably dispersed. One kind of these inorganic particulates may be singly used or two or more kinds of them may be used together. Alternatively, particulates of a composite including a plurality of components may be used. Furthermore, for various purposes of reducing photocatalytic activity, reducing water absorption and the like, the inorganic particulates may be doped with a different kind of metal, coated with a different metal oxide such as silica or alumina on their surface layers, or subjected to surface modification with a silane coupling agent, a titanate coupling agent, an organic acid (such as a carboxylic acid, a sulfonic acid, a phosphoric acid or a phosphonic acid) or a dispersing agent having an organic acid group. The number average primary particle size of the inorganic particulates may be generally approximately 1 nm through 1000 nm, and when it is too small, the properties of the substance may be changed, and when it is too large, the influence of Rayleigh scattering may be largely exhibited, and therefore, the number average primary particle size is preferably 1 nm through 15 nm, more preferably 2 nm through 10 nm and particularly preferably 3 nm through 7 nm. Moreover, the particle size distribution of the inorganic particulates is preferably as small as possible. In this manner, monodisperse particulates may be variously defined, and for example, a numerically specified range described in JP-A-2006-160992 corresponds to a preferable particle size distribution. At this point, the aforementioned number average primary particle size may be measured with, for example, an X-ray diffractometer (XRD), a transmission electron microscope (TEM) or the like. The refractive index of the inorganic particulates at 22°C and a wavelength of 589 nm is preferably 1.90 through 3.00, more preferably 1.90 through 2.70 and particularly preferably 2.00 through 2.70. The content of the inorganic particulates in the resin is preferably 5 mass% or more, more preferably 10 through 70 mass% and particularly preferably 30 through 60 mass% from the viewpoint of transparency and improvement in the refractive index.

In order to homogeneously disperse the particulates in the resin composition, the particulates are dispersed preferably by appropriately using, for example, a dispersing agent including a functional group with reactivity with a resin monomer forming the matrix (described in, for example, an embodiment of JP-A-2007-238884), a block copolymer including a hydrophobic chain segment and a hydrophilic chain segment (described in, for example, JP-A-2007-211164), a resin having, in a terminal or a side chain of a high polymer molecule, a functional group capable of forming an arbitrary chemical bond with the inorganic particulate (described in, for example, JP-A-2007-238929 and JP-A-2007-238930) or the like.

Furthermore, the resin composition may appropriately include a known releasing agent such as a silicon-based, a fluorine-based or a long-chain alkyl group-containing compound or an additive such as an antioxidant like hindered phenol or the like.

The resin composition may include a curing catalyst or an initiator if necessary. A specific example is a compound accelerating a curing reaction (i.e., radical polymerization or ion polymerization) through the function of heat or activation energy beams described in, for example, JP-A-2005-92099 (in paragraphs [0063] through [0070]). The content of such a curing reaction accelerator depends upon the type of catalyst or initiator or the site with curing reactivity and may not be unconditionally specified but, in general, the content is preferably approximately 0.1 through 15 mass% and more preferably approximately 0.5 through 5 mass% on the basis of the total solid content of the curing reactive resin composition.

The resin composition may be fabricated by appropriately mixing the aforementioned components. At this point, in the case where the other components may be dissolved in a liquid low-molecular monomer (i.e., a reactive diluent), there is no need to separately add a solvent. In the other cases, however, the curable resin composition may be fabricated by dissolving the components by using a solvent. The solvent to be used for the curable resin composition is not particularly specified but may be appropriately selected as far as the resin composition may be homogeneously dissolved or dispersed therein without precipitating, and specific examples are ketones (such as acetone, methyl ethyl ketone or methyl isobutyl ketone), esters (such as ethyl acetate or butyl acetate), ethers (such as tetrahydrofuran or 1,4-dioxane), alcohols (such as methanol, ethanol, isopropyl alcohol, butanol or ethylene glycol), aromatic carbon hydroxides (such as toluene or xylene) and water. When the curable resin composition includes the solvent, the shape of the molding die is transferred preferably after casting the composition onto a substrate and/or a die and drying the solvent.

Subsequently, as illustrated in FIG. 8B, the upper die 20 is lowered, and the molding material M is deformed in accordance with the shapes of the transfer faces 21 and 31 by sandwiching and pressing the molding material M between the transfer face 21 of the upper die 20 and the transfer face 31 of the lower die 30.

Thereafter, after completely lowering the upper die 20, the molding material M is provided with curing energy by heating it or irradiating it with the activation energy beams so as to cure the molding material M between the transfer face 21 of the upper die 20 and the transfer face 31 of the lower die 30, and thus, the lens array 10 is obtained. The lens part 6 is molded between the lens forming face 22 of the upper 20 and a lens forming face 32 of the lowered die 30 paired with each other. Furthermore, the substrate part 11 is molded between the transfer face 21 of the upper die 20 and the transfer face 31 of the lower die 30 excluding the lens forming faces 22 and 32.

Then, the lens array 10 is released from the upper die 20 and the lower die 30 as illustrated in FIG. 8C.

In the aforementioned fabrication process for the master, the resin supplied onto the master substrate is cured in two steps of first curing processing performed through the irradiation with UV and second curing processing performed by supply heat, but the process for curing the resin is not limited to this.

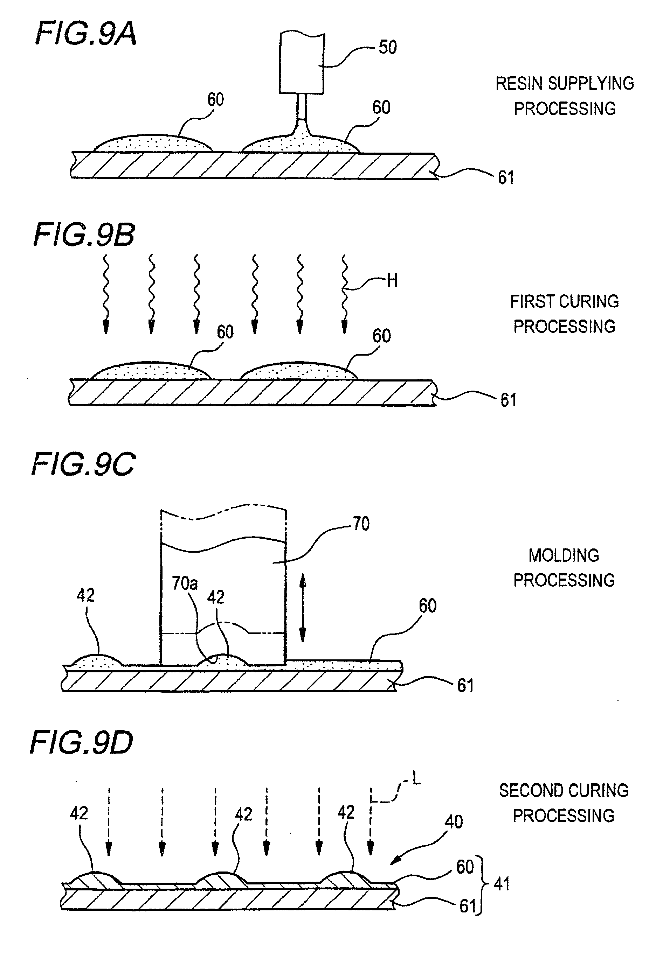

FIGS. 9A through 9D illustrate a modification of the fabrication procedures for the master of FIGS. 6A through 6D. A resin 60 used in this modification is a resin with a UV-curing property and a thermosetting property, and is cured to some extent by supplying heat and completely cured further through irradiation with UV.

First, the resin 60 is supplied onto the master substrate 61 by using a dispenser 50 as illustrated in FIG. 9A. The resin 60 is supplied onto the master substrate 61 in a prescribed amount in each of a plurality of positions disposed at constant intervals.

After supplying the resin 60, heat H is supplied to all the portions of the resin 60 provided on the master substrate 61 as illustrated in FIG. 9B. Thus, the resin 60 is cured up to a quasi-cured state, that is, a cured state where the resin 60 is able to be deformed by applying a pressure in subsequent molding processing and the deformed shape of the resin 60 may be retained (first curing processing). At this point, the heat H is simultaneously supplied to all the portions of the resin 60 disposed in the plural positions on the master substrate 61 so as to cure them as a whole up to the quasi-cured state. The resin 60 has viscosity of $10^2$ through $10^5$ Pa·s in the quasi-cured state.

After curing the resin 60 up to the quasi-cured state, the resin 60 is molded by using the master molding die 70 as illustrated in FIG. 9C, so as to form a lens shape face 42 on the master substrate 61. By repeating the transfer using the master molding die 70, lens shape faces 42 in the same number as the lens parts 6 of the lens array 10 are formed on the surface of the master substrate 61.

After repeating the transfer using the master molding die 70 by a prescribed number of times, the lens shape faces 42 in the prescribed number formed on the master substrate 61 are simultaneously irradiated with UV L as illustrated in FIG. 9D, so as to completely cure the resin 60 including the lens shape faces 42 and a flat portion disposed around the lens shape faces 42 (second curing processing). Thus, the master 40 is obtained.

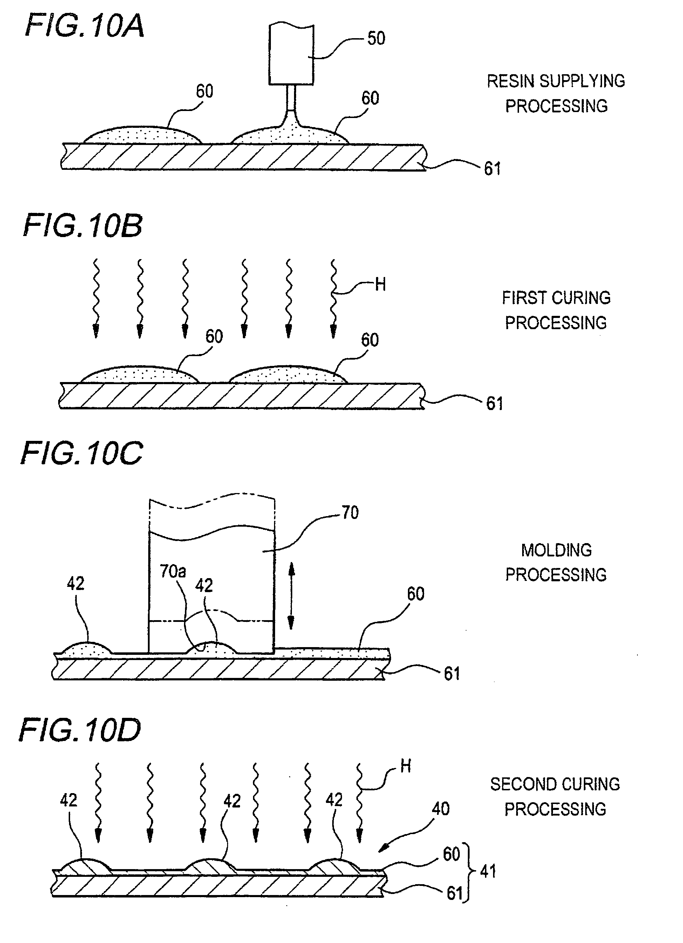

FIGS. 10A through 10D illustrate another modification of the fabrication procedures for the master of FIGS. 6A through 6D. A resin 60 used in this modification is a thermosetting resin, and is cured to some extent by supplying heat and completely cured by further supplying heat.

First, the resin 60 is supplied onto the master substrate 61 by using a dispenser 50 as illustrated in FIG. 10A. The resin 60 is supplied onto the master substrate 61 in a prescribed amount in each of a plurality of positions disposed at constant intervals.

After supplying the resin 60, heat H is supplied to all the portions of the resin 60 provided on the master substrate 61 as illustrated in FIG. 10B. Thus, the resin 60 is cured up to a quasi-cured state, that is, a cured state where the resin 60 is able to be deformed by applying a pressure in subsequent molding processing and the deformed shape of the resin 60 may be retained (first curing processing). At this point, the heat H is simultaneously supplied to all the portions the resin 60 disposed in the plural positions on the master substrate 61 so as to cure them as a whole up to the quasi-cured state. The resin 60 has viscosity of $10^2$ through $10^6$ Pa·s in the quasi-cured state.

After curing the resin 60 up to the quasi-cured state, the resin 60 is molded by using the master molding die 70 as illustrated in FIG. 10C, so as to form a lens shape face 42 on the master substrate 61. By repeating the transfer using the master molding die 70, lens shape faces 42 in the same number as the lens parts 6 of the lens array 10 are formed on the surface of the master substrate 61.

After repeating the transfer using the master molding die 70 by a prescribed number of times, the heat H is simultaneously supplied to the lens shape faces 42 in the prescribed number formed on the master substrate 61 as illustrated in FIG. 10D, so as to completely cure the resin 60 including the lens shape faces 42 and a flat portion disposed around the lens shape faces 42 (second curing processing). Thus, the master 40 is obtained.

In this modification, the resin is cured by heating both in the first curing processing, and the second curing processing. A temperature T1 at which the resin is cured in the first curing processing is preferably lower than a temperature T2 at which the resin is cured in the second curing processing. A curing degree of the resin attained through heating (i.e., a degree of polymerization proceeded in the curable material) depends upon the heating time, and hence is controlled in the first curing processing in accordance with a product of a heating time t1 and the curing temperature T2.

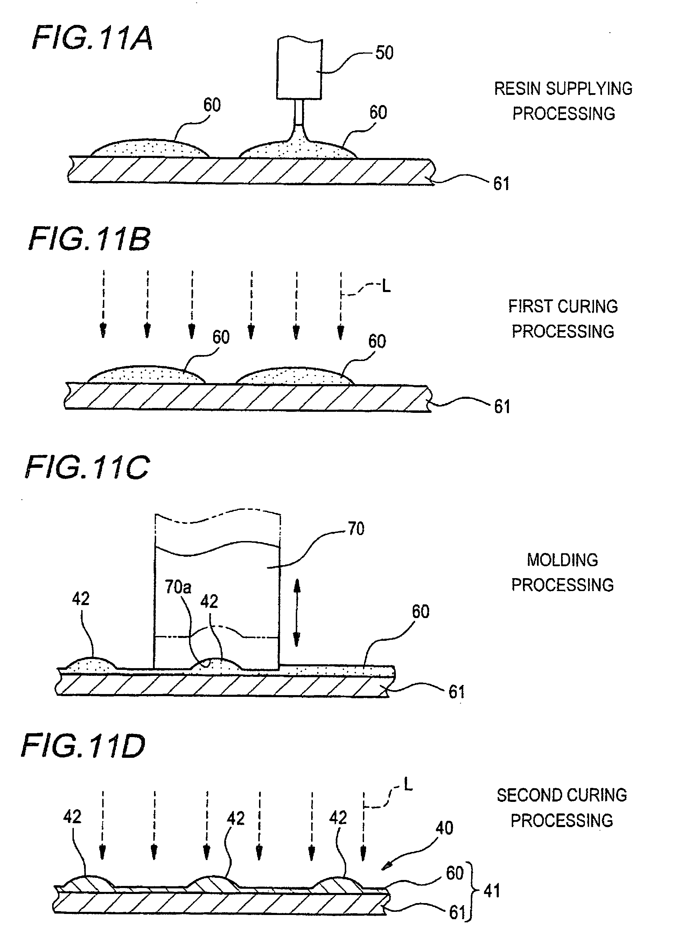

FIGS. 11A through 11D illustrate another modification of the fabrication procedures for the master of FIGS. 6A through 6D. A resin 60 used in this modification is a UV-curing resin, and is cured to some extent through irradiation with UV and completely cured further through irradiation with UV

First, the resin 60 is supplied onto the master substrate 61 by using a dispenser 50 as illustrated in FIG. 11A. The resin 60 is supplied onto the master substrate 61 in a prescribed amount in each of a plurality of positions disposed at constant intervals.

After supplying the resin 60, UV L is supplied to all the portions of the resin 60 provided on the master substrate 61 as illustrated in FIG. 11B. Thus, the resin 60 is cured up to a quasi-cured state, that is, a cured state where the resin 60 is able to be deformed by applying a pressure in subsequent molding processing and the deformed shape of the resin 60 may be retained (first curing processing). At this point, the UV L is simultaneously supplied to all the portions of the resin 60 disposed in the plural positions on the master substrate G1 so as to cure them as a whole up to the quasi-cured state. The resin 60 has viscosity of $10^2$ through $10^6$ Pa·s in the quasi-cured state.

After curing the resin 60 up to the quasi-cured state, the resin 60 is molded by using the master molding die 70 as illustrated in FIG. 11C, so as to form a lens shape face 42 on the master substrate 61. By repeating the transfer using the master molding die 70, lens shape faces 42 in the same number as the lens parts 6 of the lens array 10 are formed on the surface of the master substrate 61.

After repeating the transfer using the master molding die 70 by a prescribed number of times, the lens shape faces 42 in the prescribed number formed on the master substrate 61 are simultaneously irradiated with UV L as illustrated in FIG. 11D, so as to completely cure the resin 60 including the lens shape faces 42 and a flat portion disposed around the lens shape faces 42 (second curing processing). Thus, the master 40 is obtained.

In this modification, the resin is cured through the UV irradiation in both the first curing processing and the second curing processing. Assuming that UV output is P1, an irradiation time is tp1 and a curing temperature is T1 in curing the resin in the first curing processing and that UV output is P2, an irradiation time is tp2 and a curing temperature is T2 in curing the resin in the second curing processing, the following relationship holds:

$$P1 \times tp1 \times T1 < P2 \times tp2 \times T2$$

At this point, when the UV output P1 employed in the first curing processing is smaller than the UV output P2 employed in the second curing processing, the irradiation time may be advantageously suppressed to be minimum, which is preferred because the fabrication efficiency is thus improved.

Next, a resin used in the fabrication process for the master to be cured in two steps using at least one of UV and heat will be described.

A preferable resin composition includes monomers having different reactivity, such as a combination of a ring opening polymerizable monomer (such as an epoxy group-containing monomer) and a radial polymerizable monomer (such as (meth)acryloyl group-containing monomer), a curing assistant for accelerating a reaction of one of the monomers through a function of light or heat and a curing assistant for accelerating a reaction of the other monomer through a function of different energy (which difference includes not only a difference between the light and the heat but also a difference in a light irradiation wavelength, a heating temperature or the like).

Alternatively, a resin composition including a monomer with a single polymerization property, a curing assistant for accelerating a reaction through a function of heat and a curing assistant for accelerating a reaction through a function of light may be preferably used.

Examples of the resin composition including monomers with different reactivity are resin compositions described in, for example, JP-A-11-228610, JP-A-2003-128747, JP-A-2004-315744, JP-A-2006-131866 and JP-A-2006-131867, and JP-A-2009-513 777.

An example of the resin composition including a monomer with a single polymerization property is a resin composition described in, for example, JF-A-8-258172.

Examples of the resin composition and a curing reaction caused by using the resin composition will now be exemplarily described. (Example 1 of Resin Composition: Resin composition A curable in two steps of light and heat)

A curable resin composition was prepared by mixing and dissolving 45 parts by weight of glycidyl methacrylate (brand name: Light-ester G; manufactured by Kyoeisha Chemical Co., Ltd.), 1 part by weight of dipentaerythritol hexacrylate (manufactured by Aldrich), 50 parts by weight of alicyclic anhydride (brand name: Rikacid HNA-100; manufactured by New Japan Chemical Co., Ltd.), 1 part by weight of a photoradical polymerization initiator (brand name: Irgacure 184; manufactured by Ciba Specialty Chemicals), and 3 parts by weight of thermionic polymerization initiator (brand name: Alicart 336; manufactured by Aldrich).

When the aforementioned resin composition A was used, a high-pressure mercury lamp was used as a light source for performing irradiation at integrated exposure of 3000 mJ/cm$^2$ in the first curing processing. For supplying heat in the second curing processing, the curing temperature was set to 180°C and the heating time was set to 5 minutes. (Example 2 of Resin Composition: Resin composition B curable in two-steps of heat and heat)

A curable resin composition B was prepared by mixing and dissolving 45 parts by weight of glycidyl methacrylate (brand name: Light-ester G; manufactured by Kyoeisha Chemical Co., Ltd.), 1 part by weight of dipentaerythritol hexacrylate (manufactured by Aldrich), 50 parts by weight of alicyclic anhydride (brand name: Rikacid HNA-100; manufactured by New Japan Chemical Co., Ltd.), 1 part by weight of thermoradical polymerization initiator (brand name: Perocta ND; manufactured by NOF Corporation), and 3 parts by weight of a thermionic polymerization initiator (brand name: Alicart 336; manufactured by Aldrich).

When the aforementioned resin composition B was used, a radical polymerization reaction was caused at a curing temperature of 120°C with a heating time of 2 minutes for supplying heat in the first curing processing, and an ionic polymerization reaction was caused at a curing temperature of 180°C with a heating time of 5 minutes for supplying heat in the second curing processing. (Example 3 of Resin Composition: Resin composition C curable in two steps of heat and light)

A curable resin composition C was prepared by mixing and dissolving 85.5 parts by weight of 3,4-epoxycyclohexyl methyl methacrylate (brand name: Cyclomer M-100; manufactured by Daicel Chemical Industries, Ltd.), 0.5 part by weight of dipentaerythritol hexacrylate (manufactured by Aldrich), 10 parts by weight of 3,4-epoxycyclohexyl methyl-3',4'-epoxycyclohexane carboxylate (brand name: Celoxide 2021P; manufactured by Daicel Chemical Industries, Ltd.), 2 parts by weight of thermoradical polymerization initiator (brand name: Perocta ND; manufactured by NOF Corporation), and 3 parts by weight of triaryl sulfonium hexafluoroantimonate (brand name: UV-6974; manufactured by Union Carbide Corporation).

When the aforementioned resin composition C was used, the curing temperature was set to 120°C and the heating time was set to 2 minutes for supplying heat in the first curing processing, and a high-pressure mercury lamp was used as a light source for performing irradiation at an integrated exposure of 3000 mJ/cm$^2$ in the second curing processing. Furthermore, post-curing at 100°C for 2 hours (namely, post-heating at 100°C for 2 hours for sufficiently completing the curing reaction) is preferably performed.

As discussed above, the exemplary embodiments disclose the following method.

(1) A method for fabricating a master for use in fabrication of a molding die to be used in molding of a molded body having a plurality of molding parts arranged thereon, includes: a resin supplying step of supplying a resin onto a master substrate; a first curing step of curing the supplied resin as a whole up to a quasi-cured state corresponding to a cured state where the resin is able to be deformed at a pressure applied in the molding and may retain a deformed shape thereof; a molding step of reprotectly transferring, onto the resin, a plane in the same shape as molding faces of the molding parts by using a master molding die after the first curing step; and a second curing step of further curing the resin after the molding step.

(2) The method for fabricating the master according to (1), the resin is cured up to the quasi-cured state through irradiation with light in the first curing step, and the resin is further cured by supplying heat in the second curing step.

(3) The method for fabricating the master according to (1), the resin is cured up to the quasi-cured state by supplying heat in the first curing step, and the resin is further cured through irradiation with light in the second curing step.

(4) The method for fabricating the master according to (1), the resin is cured up to the quasi-cured state by supplying heat in the first curing step, and the resin is further cured by supplying heat in the second curing step.

(5) The method for fabricating the master according to (1), the resin is cured up to the quasi-cured state through irradiation with light in the first curing step, and the resin is further cured through irradiation with light in the second curing step.

(6) The method for fabricating the master according to (4), the resin is cured in the first curing step at a temperature lower than in the second curing step.

(7) The method for fabricating the master according to (5), optical output is smaller in the first curing step than in the second curing step.

The method for fabricating a lens array described so far is applicable to fabrication of an imaging lens provided in an imaging part of a digital camera, an endoscope, portable electronic equipment or the like.

## Claims

1. A method for fabricating a master (40) for use in fabrication of a molding die (20) to be used in molding of a molded body (10) having a plurality of molding parts (6) arranged thereon, comprising:

    a resin supplying step of supplying a resin (60) onto a master substrate (61);
    a first curing step of curing the supplied resin as a whole up to a quasi-cured state corresponding to a cured state where the resin is able to be deformed at a pressure applied in the molding and may retain a deformed shape thereof;
    a molding step of repeatedly transferring, onto the resin, a plane in the same shape as molding faces of the molding parts by using a master molding die (70) after the first curing step; and
    a second curing step of further curing the resin after the molding step.

2. The method for fabricating the master according to claim 1,
    wherein the resin is cured up to the quasi-cured state through irradiation with light in the first curing step, and
    the resin is further cured by supplying heat in the second curing step.

3. The method for fabricating the master according to claim 1,
    wherein the resin is cured up to the quasi-cured state by supplying heat in the first curing step, and
    the resin is further cured through irradiation with light in the second curing step.

4. The method for fabricating a master according to claim 1,
    wherein the resin is cured up to the quasi-cured state by supplying heat in the first curing step, and
    the resin is further cured by supplying heat in the second curing step.

5. The method for fabricating the master according to claim 1,
    wherein the resin is cured up to the quasi-cured state through irradiation with light in the first curing step, and

the resin is further cured through irradiation with light in the second curing step.

6. The method for fabricating the master according to claim 4,
    wherein the resin is cured in the first curing step at a temperature lower than in the second curing step.

7. The method for fabricating the master according to claim 5,
    wherein optical output is smaller in the first curing step than in the second curing step.

## Patentansprüche

1. Verfahren zur Herstellung eines Masters (40) zur Verwendung in der Herstellung eines Formungswerkzeugs (20), das in der Formung eines geformten Körpers (10), der mehrere darauf angeordnete Formungsteile (6) aufweist, verwendet werden soll, mit:

    einem Harzzuführschritt des Zuführens eines Harzes (60) auf ein Mastersubstrat (61);
    einem ersten Aushärtungsschritt des Aushärtens des zugeführten Harzes als Ganzes bis zu einem quasi-ausgehärteten Zustand, der einem ausgehärteten Zustand entspricht, in dem das Harz in der Lage ist, durch einen in der Formung aufgebrachten Druck verformt zu werden und eine verformte Form desselben beibehalten kann;
    einem Formungsschritt nach dem ersten Aushärtungsschritt mit wiederholtem Aufbringen einer Ebene mit der gleichen Form wie Formungsflächen der Formungsteile, auf das Harz unter Verwendung eines Masterformungswerkzeugs (70); und
    einem zweiten Aushärtungsschritt des weiteren Aushärtens des Harzes nach dem Formungsschritt.

2. Verfahren zur Herstellung des Masters gemäß Anspruch 1, bei dem das Harz in dem ersten Aushärtungsschritt durch Bestrahlung mit Licht bis zu dem quasi-ausgehärteten Zustand ausgehärtet wird, und das Harz in dem zweiten Aushärtungsschritt durch Zuführen von Wärme weiter ausgehärtet wird.

3. Verfahren zur Herstellung des Masters gemäß Anspruch 1, bei dem das Harz in dem ersten Aushärtungsschritt durch Zuführen von Wärme bis zu dem quasi-ausgehärteten Zustand ausgehärtet wird, und das Harz in dem zweiten Aushärtungsschritt durch Bestrahlung mit Licht weiter ausgehärtet wird.

4. Verfahren zur Herstellung eines Masters gemäß Anspruch 1, bei dem das Harz in dem ersten Aushärtungsschritt durch Zuführen von Wärme bis zu dem quasi-ausgehärteten Zustand ausgehärtet wird, und das Harz in dem zweiten Aushärtungsschritt durch Zuführen von Wärme weiter ausgehärtet wird.

5. Verfahren zur Herstellung des Masters gemäß Anspruch 1, bei dem das Harz in dem ersten Aushärtungsschritt durch Bestrahlung mit Licht bis zu dem quasi-ausgehärteten Zustand ausgehärtet wird, und das Harz in dem zweiten Aushärtungsschritt durch Bestrahlung mit Licht weiter ausgehärtet wird.

6. Verfahren zur Herstellung des Masters gemäß Anspruch 4, bei dem das Harz in dem ersten Aushärtungsschritt bei einer Temperatur niedriger als in dem zweiten Aushärtungsschritt, ausgehärtet wird.

7. Verfahren zur Herstellung des Masters gemäß Anspruch 5, bei dem die optische Leistung im ersten Aushärtungsschritt kleiner als in dem zweiten Aushärtungsschritt ist.

## Revendications

1. Procédé pour fabriquer un maître (40) pour une utilisation dans la fabrication d'une matrice de moulage (20) à utiliser pour le moulage d'un corps moulé (10) comportant une pluralité de parties de moulage (6) agencées sur celui-ci comprenant :

   une étape de fourniture de résine pour fournir une résine (60) sur un substrat maître (61) ;
   une première étape de durcissement pour durcir la résine délivrée dans son ensemble jusqu'à ce qu'un état quasi-durci correspondant à un état durci dans lequel la résine durcie peut être déformée à une pression appliquée lors du moulage et peut conserver une forme déformée de celle-ci ;
   une étape de moulage pour transférer de manière répétée, sur la résine, un plan en la même forme que les faces de moulage des parties de moulage en utilisant une matrice de moulage maître (70) après la première étape de durcissement ; et
   une deuxième étape de durcissement pour durcir davantage la résine après l'étape de moulage.

2. Procédé pour fabriquer le maître selon la revendication 1,
   dans lequel la résine est durcie jusqu'à l'état quasi-durci par le rayonnement de lumière à la première étape de durcissement, et
   la résine est en outre durcie par l'application de chaleur à la deuxième étape de durcissement.

3. Procédé pour fabriquer le maître selon la revendication 1,
   dans lequel la résine est durcie jusqu'à l'état quasi-durci en appliquant de la chaleur à la première étape de durcissement, et
   la résine est en outre durcie par le rayonnement de lumière à la deuxième étape de durcissement.

4. Procédé pour fabriquer un maître selon la revendication 1,
   dans lequel la résine est durcie jusqu'à l'état quasi-durci en appliquant de la chaleur à la première étape de durcissement, et
   la résine est en outre durcie en appliquant de la chaleur à la deuxième étape de durcissement.

5. Procédé pour fabriquer le maître selon la revendication 1,
   dans lequel la résine est durcie jusqu'à l'état quasi-durci par le rayonnement de lumière à la première étape de durcissement, et
   la résine est en outre durcie par le rayonnement de lumière à la deuxième étape de durcissement.

6. Procédé pour fabriquer le maître selon la revendication 4,
   dans lequel la résine est durcie à la première étape de durcissement à une température inférieure à celle de la deuxième étape de durcissement.

7. Procédé pour fabriquer le maître selon la revendication 5,
   dans lequel la sortie optique est plus petite à la première étape de durcissement qu'à la deuxième étape de durcissement.

## FIG.1

## FIG.2

*FIG.3*

*FIG.4*

FIG.5

## FIG.6A

RESIN SUPPLYING
PROCESSING

## FIG.6B

FIRST CURING
PROCESSING

## FIG.6C

MOLDING
PROCESSING

## FIG.6D

SECOND CURING
PROCESSING

*FIG.7*

*FIG.8A*

*FIG.8B*

*FIG.8C*

## FIG.9A

RESIN SUPPLYING
PROCESSING

## FIG.9B

FIRST CURING
PROCESSING

## FIG.9C

MOLDING
PROCESSING

## FIG.9D

SECOND CURING
PROCESSING

*FIG.10A*

RESIN SUPPLYING
PROCESSING

*FIG.10B*

FIRST CURING
PROCESSING

*FIG.10C*

MOLDING
PROCESSING

*FIG.10D*

SECOND CURING
PROCESSING

18

## FIG.11A

RESIN SUPPLYING
PROCESSING

50

60

60

61

## FIG.11B

FIRST CURING
PROCESSING

L

60

60

61

## FIG.11C

MOLDING
PROCESSING

70

70a

42

42

60

61

## FIG.11D

SECOND CURING
PROCESSING

42

42

42

L

40

60

61

41

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4226067 B
- WO 2004002706 A2
- WO 2009116371 A1
- US 2008079182 A1
- JP 9137043 A
- JP 10067970 A
- JP 2003055316 A
- JP 2447334018 A
- JP 2007238883 A
- JP 5209027 A
- JP 10298265 A
- JP 2001019740 A
- JP 2004302293 A
- JP 2007211247 A
- JP 6298883 A
- JP 2001247793 A
- JP 2006225434 A
- JP 2004210932 A
- JP 8134405 A
- JP 2002105110 A
- JP 7062065 A
- JP 2003020334 A
- JP 2005015666 A
- JP 2006131868 A
- JP 2004002719 A
- JP 2008238417 A
- JP 10152551 A
- JP 2002212500 A
- JP 2006199790 A
- JP 2007002144 A
- JP 2007284650 A
- JP 2008105999 A
- JP 60038411 A
- JP 10067977 A
- JP 2002047335 A
- JP 2003238884 A
- JP 2004083855 A
- JP 2005325331 A
- WO 2006095610 A
- JP 2537540 B
- JP 2006160992 A
- JP 2007238884 A
- JP 2007211164 A
- JP 2007238929 A
- JP 2007238930 A
- JP 2005092099 A
- JP 11228610 A
- JP 2003128747 A
- JP 2004315744 A
- JP 2006131866 A
- JP 2006131867 A
- JP 2009513777 A
- JP 8258172 A